# EUROPEAN PATENT APPLICATION

(11) **EP 3 997 999 A1**
(43) Date of publication of application: **18.05.2022**
(21) Application number: 20836860.5
(22) Date of filing: 10.07.2020
(51) Int. Cl.: A45B 3/00, B61B 1/02, G08B 21/02, G08B 21/24, G08B 25/04, G06K 7/10, H04W 84/10

(54) **COMMUNICATION SYSTEM, PROCESSING DEVICE, AND PERSONAL POSSESSION**

(30) Priority: 11.07.2019 JP 2019129068
(71) Applicant: Kyocera Corporation, Kyoto-shi, Kyoto 612-8501 (JP)
(72) Inventor: NAKAGAWA, Hirofumi, Kyoto-shi, Kyoto 612-8501 (JP)
(74) Representative: Viering, Jentschura & Partner mbB Patent- und Rechtsanwälte
(86) International application number: PCT/JP2020/027125
(87) International publication number: WO 2021/006354

(57) **Abstract**

A communication system includes at least one first communicator, a second communicator, and a notifier. The at least one first communicator is installable in a boundary area between a first zone and a second zone. The second communicator is installable on a carried object to be carried by a person movable in the first zone. The second communicator communicates with the at least one first communicator. The notifier notifies the person carrying the carried object in response to the second communicator receiving a first signal from the at least one first communicator.

## Description

### CROSS-REFERENCE TO RELATED APPLICATION

This application claims priority to Japanese Patent Application No. 2019-129068 filed on July 11, 2019, the entire disclosure of which is incorporated herein by reference.

### FIELD

The present disclosure relates to a communication technique.

### BACKGROUND

Patent Literature 1 describes a technique for movable platform barriers.

### CITATION LIST

### PATENT LITERATURE

Patent Literature 1: Japanese Unexamined Patent Application Publication No. 2018-30383

### BRIEF SUMMARY

### TECHNICAL PROBLEM

The safety of people is to be improved in various places. For example, the safety of people is to be improved at train stations where trains are stopped and people can possibly fall from station platforms.

### SOLUTION TO PROBLEM

One or more aspects are directed to a communication system, a processor, and a carried object. A communication system according to an embodiment includes at least one first communicator, a second communicator, and a notifier. The at least one first communicator is installable in a boundary area between a first zone and a second zone. The second communicator is installable on a carried object to be carried by a person movable in the first zone. The second communicator communicates with the at least one first communicator. The notifier provides a notification to the person carrying the carried object in response to the second communicator receiving a first signal from the at least one first communicator.

A processor according to another embodiment includes the second communicator and the notifier included in the above communication system.

A carried object according to another embodiment includes the above processor and is to be carried by a person.

### ADVANTAGEOUS EFFECTS

The safety of people is improved.

### BRIEF DESCRIPTION OF DRAWINGS

FIG. 1 is a schematic diagram of a communication system showing an example structure.
FIG. 2 is a block diagram of an example carried object showing an example structure.
FIG. 3 is a diagram of the carried object showing an example appearance.
FIG. 4 is a block diagram of a communicator showing an example structure.
FIG. 5 is a block diagram of a communicator showing an example structure.
FIG. 6 is a flowchart showing an example operation of the communication system.
FIG. 7 is a schematic diagram of a communication system showing an example structure.
FIG. 8 is a diagram of communicators in an example arrangement.
FIG. 9 is a schematic diagram of a communication system showing an example structure.
FIG. 10 is a schematic diagram of a communication system showing an example structure.
FIG. 11 is a schematic diagram of a communication system showing an example structure.
FIG. 12 is a schematic diagram of a communication system showing an example structure.
FIG. 13 is a schematic diagram of a communication system showing an example structure.
FIG. 14 is a schematic diagram of a communication system showing an example structure.
FIG. 15 is a schematic diagram of a communication system showing an example structure.
FIG. 16 is a schematic diagram of a communication system showing an example structure.
FIG. 17 is a schematic diagram of a communication system showing an example structure.
FIG. 18 is a schematic diagram of a communication system showing an example structure.
FIG. 19 is a schematic diagram of a communication system showing an example structure.
FIG. 20 is a schematic diagram of a communication system showing an example structure.

### DETAILED DESCRIPTION

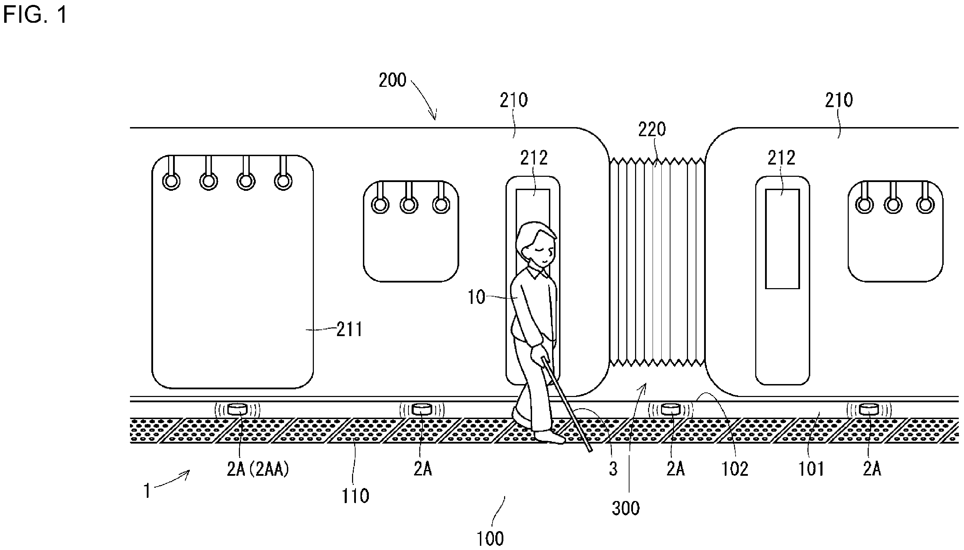

FIG. 1 is a schematic diagram of a communication system 1 showing an example structure. The communication system 1 can improve the safety of a person in a particular place. For example, the communication system 1 can improve the safety of a person at a station. An example use of the communication system 1 at a station will be described.

The communication system 1 includes, for example, multiple communicators 2A and a carried object 3 that is carried by a person 10. The multiple communicators 2A can communicate with the carried object 3. In the example of FIG. 1, the person 10 is a visually impaired person, and the carried object 3 is a white cane. The person 10 may be hereafter referred to as a user 10. The carried object 3 may be referred to as a white cane 3.

FIG. 1 shows a train 200 stopped at a station platform 100 at a station. The train 200 is an example of a vehicle. The train 200 includes multiple unit cars 210. The train 200 also includes couplers 220 coupling adjacent unit cars 210. Each unit car 210 has an entrance 211 for passengers to enter and exit the unit car 210. Each entrance 211 has a door that is open and closed. Each unit car 210 may also include a crew room door 212 near a coupler 220. The station platform 100 may be hereafter simply referred to as the platform 100. The door at each entrance 211 may be referred to as a passenger door.

The communicators 2A are installed in a boundary area between a first zone in which persons move and a second zone. The boundary area includes the boundary between the first zone and the second zone. In the present embodiment, the first zone is the platform 100 on which the person 10 moves, and the second zone is a zone including railway tracks and adjacent to the platform 100. In other words, the train 200 is stopped in the second zone, and the train 200 is also movable in the second zone. A zone including the railway tracks and adjacent to the platform 100 may be hereafter referred to as a trackside zone.

In the example of FIG. 1, the communicators 2A are installed on an edge 101 of the platform 100 that is adjacent to and along the railway tracks for the train 200. The edge 101 of the platform 100 is included in the boundary area between the platform 100 and the trackside zone. In other words, the edge 101 is a part of the boundary area adj acent to the platform 100. The edge 101 can be an area of the platform 100 from which a person may possibly fall.

The platform 100 has braille blocks 110 installed on the edge 101. The braille blocks 110 are formally referred to as guide blocks for visually impaired persons. In the example of FIG. 1, the communicators 2A are arranged at intervals in a line along the edge 101 at positions nearer the railway tracks and adjacent to the braille blocks 110. In other words, the multiple communicators 2A are installed along the boundary area between the platform 100 and the trackside zone. The communicators 2A may be arranged at either equal or unequal intervals. The communicators 2A may be exposed on the surface of the platform 100, or may be embedded in the platform 100. The communicators 2A include communicators 2AA, which are located near the entrances 211 of the unit cars 210 of the train 200 being stopped at the platform 100. In other words, the communicators 2AA are located adjacent to the passenger doors of the train 200. The notifiers 2AA are located near the passenger doors.

Although the communicators 2A shown in FIG. 1 protrude largely from the surface of the platform 100, the communicators 2A are actually installed on the platform 100 to avoid obstructing walkers including visually impaired persons and other persons. The same applies to the communicators 2A shown in subsequent figures.

The communicators 2A and the white cane 3 can wirelessly communicate with each other using, for example, radio frequency identifiers (RFIDs). The wireless communication between the communicators 2A and the white cane 3 may use a communication frequency band included in an ultrahigh frequency (UHF) band. The UHF band is a frequency band of 860 to 960 MHz. The structure according to one or more embodiments of the present disclosure uses, for example, a frequency band of 916.7 to 920.9 MHz. Using the UHF band as the communication frequency band, the communicators 2A can communicate with the white cane 3 located distant from the communicators 2A. In the structure according to one or more embodiments of the present disclosure, the communicators 2A may be capable of communicating within a distance of, for example, 10 cm to 2 m. The communicators 2A are, for example, radio frequency (RF) tags. The white cane 3 includes, for example, a communicator that functions as an RFID reader. The white cane 3 provides a predetermined notification to the user 10 in response to a signal transmitted from one of the communicators 2A. The communicators 2A may be arranged at intervals other than the intervals specified in the example of FIG. 1. The communicators 2A may be arranged with no intervals between them. Example of Carried Object

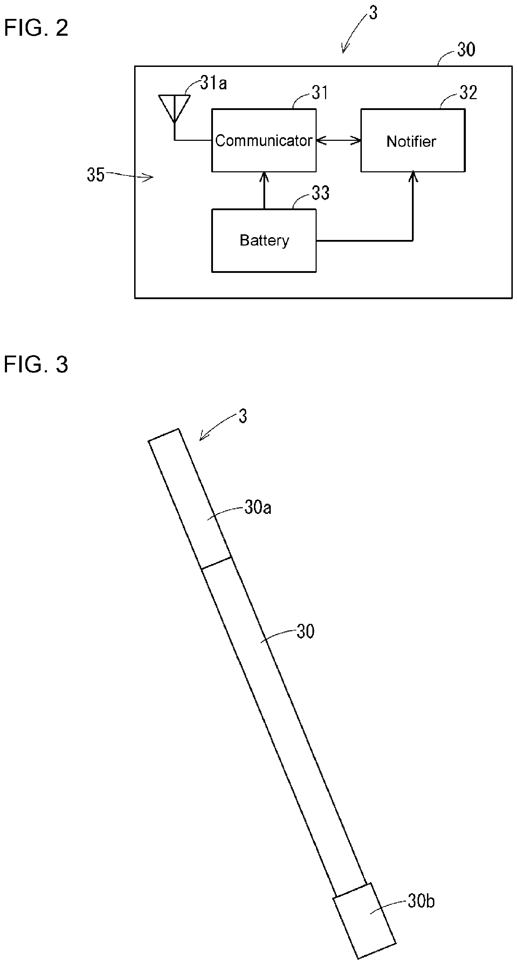

FIG. 2 is a block diagram of the white cane 3 showing an example structure. As shown in FIG. 2, the white cane 3 includes a cane body 30 and a processor 35. The cane body 30 is a rod portion and functions as an outer case of the white cane 3. The processor 35 is contained in the cane body 30. The processor 35 includes a communicator 31, a notifier 32, and a battery 33. In other words, the cane body 30 is a case for the processor 35.

FIG. 3 is a diagram of the white cane 3 showing an example appearance. As shown in FIG. 3, the cane body 30 of the white cane 3 includes a grip 30a that is grippable by the user 10. The cane body 30 has a ferrule 30b at the tip. The white cane 3 may not include the ferrule 30b.

The battery 33 powers the communicator 31 and the notifier 32. The battery 33 may be a primary battery that is not rechargeable or may be a secondary battery that is rechargeable. The battery 33 being a rechargeable battery may remain installed in the cane body 30 when recharged. In this case, the cane body 30 may include, on its surface, a charging terminal for charging the battery 33. The battery 33 contained in the cane body 30 may be chargeable contactlessly. The battery 33 may be attachable to and detachable from the cane body 30. In this case, the battery 33 may be removed from the cane body 30 before being charged. The charged battery 33 may then be installed again in the cane body 30. The battery 33 may be removable from the cane body 30 instead of being contained in the cane body 30.

The battery 33 may be installed on the grip 30a of the cane body 30. The battery 33 may be installed at the tip of the cane body 30. The battery 33 may be installed between the grip 30a and the ferrule 30b in the cane body 30. The battery 33 may be installed on the ferrule 30b.

The communicator 31 functions as an RFID reader. The communicator 31 includes an antenna 31a. The communicator 31 can directly communicate with the communicators 2A by near-field communication using the antenna 31a. In other words, the communicator 31 is a communication circuit. The communicator 31 repeatedly transmits signals from the antenna 31a regularly or irregularly.

The communicator 31 may be installed on the grip 30a of the cane body 30. The communicator 31 may be installed on the tip of the cane body 30. The communicator 31 may be installed between the grip 30a and the ferrule 30b in the cane body 30. The communicator 31 may be installed on the ferrule 30b. The antenna 31a may be installed on the grip 30a of the cane body 30. The antenna 31a may be installed at the tip of the cane body 30. The antenna 31a may be installed between the grip 30a and the ferrule 30b in the cane body 30. The antenna 31a may be installed on the ferrule 30b.

The notifier 32 can provide a notification to the person 10 carrying the white cane 3. The notifier 32 can provide a notification to the person 10 in various forms. For example, the notifier 32 may provide a notification to the person 10 using sound. In this case, the notifier 32 includes, for example, a speaker that outputs a sound. The notifier 32 may provide a notification to the person using vibration. In this case, the notifier 32 includes, for example, an oscillator that vibrates the grip 30a of the cane body 30. The notifier 32 may provide a notification to the person 10 using haptic technology. In this case, the notifier 32 may generate, for example, a predetermined pseudo sensation to a hand gripping the grip 30a. The haptic technology may use, for example, an oscillator. The notifier 32 may be installed at the same position as or at a different position from the communicator 31 in the cane body 30. The notifier 32 may be installed at any position in the cane body 30.

The notifier 32 can communicate with the communicator 31 by, for example, near-field communication. The communication between the notifier 32 and the communicator 31 may be performed using Bluetooth (registered trademark), Zigbee (registered trademark), or Wi-Fi Direct.

The notifier 32 may be installed on the grip 30a of the cane body 30. The notifier 32 may be installed at the tip of the cane body 30. The notifier 32 may be installed between the grip 30a and the ferrule 30b in the cane body 30. The notifier 32 may be installed on the ferrule 30b.

In one or more embodiments of the present disclosure, the white cane 3 may include multiple processors 35. The multiple processors 35 may include, for example, a first processor 35 including the communicator 31 and a second processor 35 including the notifier 32. The first processor 35 may be installed on the ferrule 30b. The second processor 35 may be installed on the grip 30a. For example, the first processor 35 may include an antenna 31a and a battery 33, and the second processor 35 may include a battery 33. In the processor 35, for example, the antenna 31a, the communicator 31, the notifier 32, and the battery 33 may be installed on the grip 30a, on the ferrule 30b, or between the grip 30a and the ferrule 30b. In some embodiments, the antenna 31a may be installed on the ferrule 30b, and the communicator 31, the notifier 32, and the battery 33 may be installed on the grip 30a or between the grip 30a and the ferrule 30b. The battery 33 may be installed on the grip 30a or between the grip 30a and the ferrule 30b, and the antenna 31a, the communicator 31, and the notifier 32 may be installed on the ferrule.

### Structure of Communicators Installed at Platform

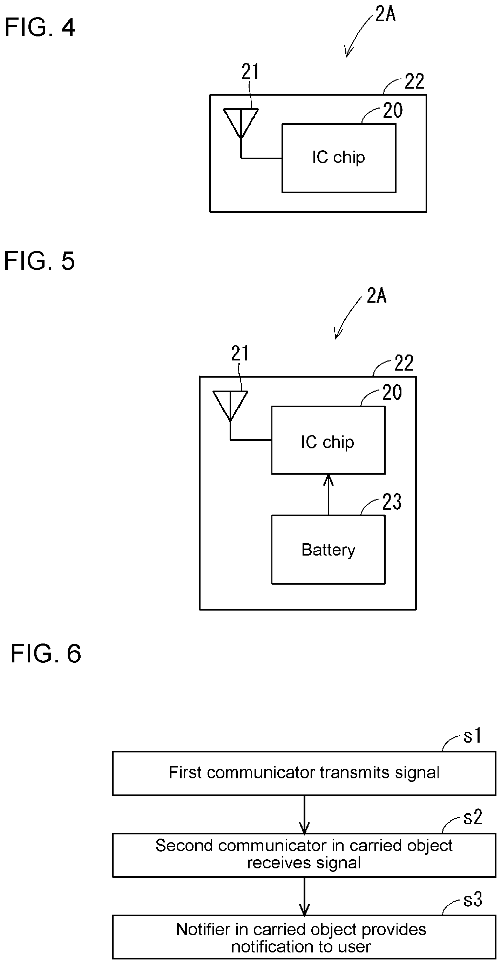

FIG. 4 is a block diagram of a communicator 2A showing an example structure. As shown in FIG. 4, each communicator 2A includes an integrated circuit (IC) chip 20, an antenna 21 connected to the IC chip 20, and a case 22 containing the IC chip 20 and the antenna 21. Each communicator 2A is, for example, a passive tag with no battery. Each communicator 2A can communicate with the communicator 31 in the white cane 3 within a distance of, for example, several tens of centimeters to one meter. The communication distance is not limited to this example.

The case 22 containing the IC chip 20 and other components may have any shape. For example, the case 22 may be a plate, may be thick, or may be circular. For each communicator 2A exposed on the surface of the platform 100, the case 22 is formed from a robust material.

The IC chip 20 uses the antenna 21 to perform near-field communication with the communicator 31 included in the white cane 3. For the communicator 2A communicating with the communicator 31 by RFID-based communication using electromagnetic induction, the antenna 31a included in the communicator 31 and the antenna 21 included in the communicator 2A each include, for example, a coil. At a shorter distance from the communicator 2A to the communicator 31 that repeatedly transmits signals through the antenna 31a, a magnetic field generated by the antenna 31a (coil) causes an induction current to flow through the antenna 21 (coil) connected to the IC chip 20 in the communicator 2A. The IC chip 20 thus receives power. The IC chip 20 can transmit signals based on the received power. The antenna 21 may be installed on an exterior surface of the case 22. Similarly, the antenna 31a in the communicator 31 may be installed on an exterior surface of the cane body 30.

Each communicator 2A may communicate with the communicator 31 by RFID-based communication using radio waves. In this case, the IC chip 20 generates power based on radio waves received with the antenna 21 and transmits a signal based on the generated power.

Each communicator 2A may be an active tag. FIG. 5 is a block diagram of a communicator 2A being an active tag. The communicator 2A shown in FIG. 5 includes a battery 23 for powering an IC chip 20.

The communicators 2A with the structure described above are installed on the platform 100 on which the user 10 walks using the white cane 3 with the ferrule 30b at the tip tapping the ground. The communicator 31 may be installed at the tip of the cane body 30 to have a smaller distance between the communicator 31 and each communicator 2A. In this case, the battery 33 in the communicator 31 can have a smaller capacity or can last longer.

The communicator 31 installed at the tip of the cane body 30 of the white cane 3 easily receives vibration applied to the ferrule 30b. In this case, the communicator 31 is to be designed for vibration applicable to the ferrule 30b. The communicator 31 may be installed on the grip 30a of the white cane 3 not to easily receive vibration applied to the ferrule 30b. The communicator 31 can thus be designed substantially independently of possible vibration applicable to the ferrule 30b. In this case, the communicator 31 can be designed more easily.

When the antenna 31a is installed on the grip 30a in the communicator 31, the antenna 31a may be covered by a hand holding the grip 30a. This may degrade the communication performance of the communicator 31. To avoid this, the antenna 31a may be installed on a portion of the grip 30a that is less likely to be covered by a hand. The portion of the grip 30a that is less likely to be covered by a hand can differ depending on the shape of the grip 30a.

### Example Operation of Communication System

FIG. 6 is a flowchart of an example operation of communication performed between the carried object 3 and the communicator 2A. The communicator 2A may be hereafter referred to as a first communicator 2A. The communicator 31 included in the carried object 3 may be referred to as a second communicator 31.

The user 10 carrying the carried object 3, which is the white cane 3 in the present embodiment, moves on the platform 100. Once the first communicator 2A enters the communication area covered by the second communicator 31 in the white cane 3, the first communicator 2A receives a signal from the second communicator 31, thus powering the IC chip 20 in the first communicator 2A.

Upon being powered, the IC chip 20 in the first communicator 2A transmits a signal (also referred to as a first signal) from the antenna 21 in step s1. The first signal may include identification information about the first communicator 2A or may include other information.

When receiving the signal from the first communicator 2A with the antenna 31a in step s2, the second communicator 31 in the white cane 3 notifies the notifier 32 included in the white cane 3 of the reception of the signal from the first communicator 2A.

In step s3, the notifier 32 provides a notification to the user 10. In step s3, the notifier 32 may provide, for example, a voice message reading the text "You are approaching an end of the platform. Please move away from a potentially dangerous zone." The notifier 32 may provide a predetermined pattern of vibration to the grip 30a of the white cane 3 with an oscillator. The notifier 32 may also use haptic technology to generate a tactile sensation to a hand gripping the grip 30a. The notifier 32 may provide multiple different notifications to the user 10. For example, the notifier 32 may use both sound and vibration to provide a notification to the user 10. The notifier 32 may use both sound and haptic technology to provide a notification to the user 10.

The processing in steps s1 to s3 is performed by and between each communicator 2A installed on the platform 100 and the white cane 3.

In the above embodiment, the communicators 2A are installed, between the first zone and the second zone, in a portion of their boundary area adjacent to or included in the first zone, but may be installed in a portion of the boundary area adjacent to or included in the second zone. In other words, the communicators 2A may be installed, between the platform 100 and the trackside zone, in a portion of their boundary area included in the trackside zone. The communicators 2A may also be installed, between the platform 100 and the trackside zone, both in a portion of their boundary area included in the platform 100 (specifically, the edge 101) and in a portion of their boundary area included in the trackside zone. The communicators 2A may also be installed on platform gates that may be installed on the edge 101 of the platform 100. In this case as well, the communicators 2A are installed in the boundary area between the platform 100 and the trackside zone. For example, each platform gate may be sandwiched by multiple communicators 2A installed on the left and the right of the doors of the platform gate. The communicators 2A may be installed on the doors of the platform gates.

In this communication system 1, the communicator 31 included in the carried object 3 receives a signal transmitted from any of the communicators 2A installed in the boundary area between the first zone in which the person 10 carrying the carried object 3 moves and the second zone, and the notifier 32 in the carried object 3 provides a notification to the person 10. In this manner, the carried object 3 provides a notification to the person 10 near the second zone. This allows the person 10 carrying the carried object 3 to easily notice a potential danger when the person 10 is near the second zone such as the trackside zone, which is a potentially dangerous zone. This improves the safety of the person 10. When the communicators 2A are installed in the boundary area between the platform 100 and the trackside zone as in the present embodiment, the carried object 3 provides a notification to the person 10 near an edge line 102 of the platform 100 (refer to FIG. 1). This reduces the possibility of the person 10 falling from the platform 100.

In the present embodiment, the multiple communicators 2A are installed along the boundary area between the first zone and the second zone. This reduces the possibility of the person 10 entering the second zone that may be potentially dangerous. This improves the safety of the person 10 further. The multiple communicators 2A are installed along the boundary area between the platform 100 and the trackside zone as in the present embodiment. This reduces the possibility of the person 10 falling from the platform 100 further.

In the present embodiment, the communicators 2A are RF tags. This simplifies the structure of the communication system 1 for reducing the possibility of the person 10 falling from the platform 100.

In the present embodiment, the communicators 2A are passive tags with no battery. These communicators 2A are inexpensive and eliminate battery replacement.

When the communicators 2A and the communicator 31 are too close to each other with a small communication distance between them, a notification to the person 10 may be delayed. This may leave a possibility of the person 10 falling from the platform 100. When the communicators 2A and the communicator 31 are far from each other with a large communication distance between them, an unintended notification may be provided to the person 10. Based on these, the communication distance between the communicators 2A and the communicator 31 is to be determined as appropriate.

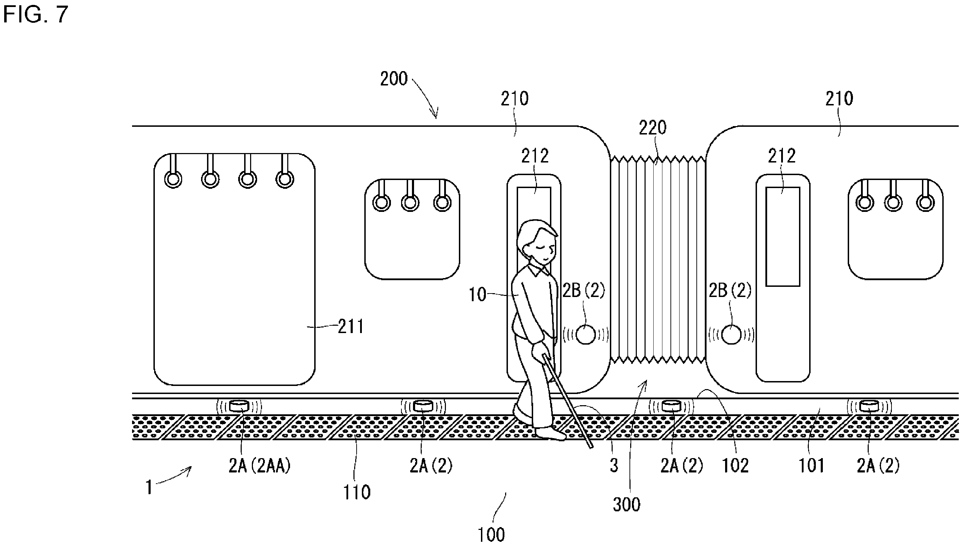

As shown in FIG. 7, the communication system 1 may include communicators 2B installed on the train 200. In the example of FIG. 7, multiple communicators 2B are installed on the train 200. The multiple communicators 2B can communicate with the white cane 3.

In the example of FIG. 7, the communicators 2B are installed adjacent to the couplers 220 in the train 200. More specifically, two communicators 2B are installed on the respective two unit cars 210 near the coupler 220 coupling the two unit cars 210. Each communicator 2B is installed on a lower portion of the unit car 210 between the crew room door 212 and the coupler 220. The communicators 2B may be exposed on the surfaces of the unit cars 210, or may be embedded in the unit cars 210.

The positions of the entrances 211 and the couplers 220 with respect to the platform 100 may vary depending on the type of the train 200. The communicators 2A installed on the platform 100 and the communicators 2B installed on the train 200 may have a positional relationship between them different from the relationship shown in FIG. 7.

The communicators 2B and the communicator 31 in the white cane 3 can communicate wirelessly with each other using, for example, RFIDs. The communicators 2B are, for example, RF tags. More specifically, the communicators 2B are passive tags. The white cane 3 provides a predetermined notification to the user 10 in response to a signal (also referred to as a second signal) transmitted from one of the communicators 2B. The communicators 2B and the communicator 31 in the white cane 3 may communicate with each other by RFID-based communication using electromagnetic induction or using radio waves. Each communicator 2B can communicate with the communicator 31 within a distance of, for example, several tens of centimeters to one meter. The communication distance is not limited to this example.

The communicators 2B may have the same structure as the communicators 2A. Each communicator 2B includes an IC chip 20 and an antenna 21, similarly to the communicators 2A. Each communicator 2B being an active tag includes a battery 23 for powering the IC chip 20, as shown in FIG. 5 above. The communicators 2A and the communicators 2B that may not be distinguished from each other may be hereafter referred to as the communicators 2.

The white cane 3 and each communicator 2B are both operated with the processing of the flowchart in FIG. 6 above. The user 10 carrying the white cane 3 moves on the platform 100. Once any communicator 2B enters the communication area covered by the communicator 31 in the white cane 3, the communicator 2B receives a signal from the communicator 31, thus powering the IC chip 20 in the communicator 2B.

Once being powered, the IC chip 20 in the communicator 2B transmits a second signal from the antenna 21 in step s1. The second signal may include identification information about the communicator 2B or may include other information.

When receiving the signal from the communicator 2B with the antenna 31a, the communicator 31 in the white cane 3 notifies the notifier 32 included in the white cane 3 of the reception of the signal from the communicator 2B (step s2).

The notifier 32 provides a notification to the user 10 (step s3). The operation of the notifier 32 is the same as the operation described above for when the white cane 3 is approaching the communicator 2A. The notifier 32 may provide different notifications when the white cane 3 is approaching the communicator 2A and when the white cane 3 is approaching the communicator 2B. For example, the notifier 32 may provide a voice message reading the text "You are approaching a train stopped at the platform. Please move away from a potentially dangerous zone." when the white cane 3 is approaching the communicator 2B. The notifier 32 may vibrate the grip 30a of the white cane 3 in different vibration patterns when the white cane 3 is approaching the communicator 2A and when the white cane 3 is approaching the communicator 2B. The notifier 32 may also use haptic technology to provide different pseudo sensations to a hand gripping the grip 30a when the white cane 3 is approaching the communicator 2A and when the white cane 3 is approaching the communicator 2B.

The positions of the communicators 2B in the height direction of the train 200 may be determined in accordance with the position of the communicator 31 in the length direction of the cane body 30. For the communicator 31 installed at the tip of the cane body 30, for example, each communicator 2B may be installed at a first position that is at a relatively low level on the train 200 in the height direction. For the communicator 31 installed on the grip 30a of the cane body 30, each communicator 2B may be installed at a second position at a level higher than the first position on the train 200 in the height direction. For example, the second position is set at a level higher than the first position by the length of the cane body 30.

The position of each communicator 2B in the height direction of the train 200 may be determined in accordance with the position of the communicator 31 in the length direction of the cane body 30 to shorten the communication distance between the communicator 31 and each communicator 2B. In this case, the battery 33 in the communicator 31 can have a smaller capacity or can last longer.

In the example of FIG. 7, as described above, the notifier 32 also provides a notification to the person 10 when the communicator 31 receives a signal from any communicator 2B installed on the train 200. In this manner, the carried object 3 provides a notification to the person 10 near the train 200 stopped at the platform 100. This allows the person 10 carrying the carried object 3 to easily notice a potential danger when the person 10 is near the train 200 being stopped. This reduces the possibility of the person 10 contacting or hitting the train 200 being stopped.

In the example of FIG. 7, each communicator 2B is installed adjacent to the coupler 220 in the train 200. This allows a notification to be provided from the carried object 3 to the person 10 near the coupler 220. This thus reduces the possibility of the person 10 falling through a gap 300 (refer to FIG. 7) between the coupler 220 and the platform 100.

In the example of FIG. 7, the two communicators 2B are installed to sandwich the coupler 220. Thus, a proper notification can be provided to the person 10 approaching the coupler 220 either in the traveling direction of the train 200 or in the direction opposite to the traveling direction. This thus further reduces the possibility of the person 10 falling through the gap 300 between the coupler 220 and the platform 100.

The use of RF tags as the communicators 2B simplifies the structure of the communication system 1. The communicators 2B being passive tags with no battery are inexpensive and eliminate battery replacement.

When the communicators 2B and the communicator 31 are too close to each other with a small communication distance between them, a notification to the person 10 may be delayed. This may leave a possibility of the person 10 hitting the train 200 being stopped. When the communicators 2B and the communicator 31 are far from each other with a large communication distance between them, an unintended notification may be provided to the person 10. Based on these, the communication distance between the communicators 2B and the communicator 31 is to be determined as appropriate.

Although the communicators 2A and the communicators 2B have the same structure in the above embodiment, they may have different structures. The first signal transmitted by the communicator 2A and the second signal transmitted by the communicator 2B may be different from each other.

The carried object 3 may include multiple communicators 31. The multiple communicators 31 may include a communicator 31 that communicates with the communicators 2A and a communicator 31 that communicates with the communicators 2B. Each of the communicators 31 included in the carried object 3 may be located at any position in the cane body 30. In the cane body 30, the communicator 31 that communicates with the communicators 2A installed at the platform 100 may be located nearer the tip of the cane body 30 than, for example, the communicator 31 that communicates with the communicators 2B installed on the train 200.

The carried object 3 may include multiple notifiers 32. The multiple notifiers 32 may include a notifier 32 that provides a notification to the user 10 using sound, a notifier 32 that provides a notification to the user 10 using vibration, and a notifier 32 that provides a notification to the user 10 using haptic technology. Each of the notifiers 32 included in the carried object 3 may be located at any position in the cane body 30.

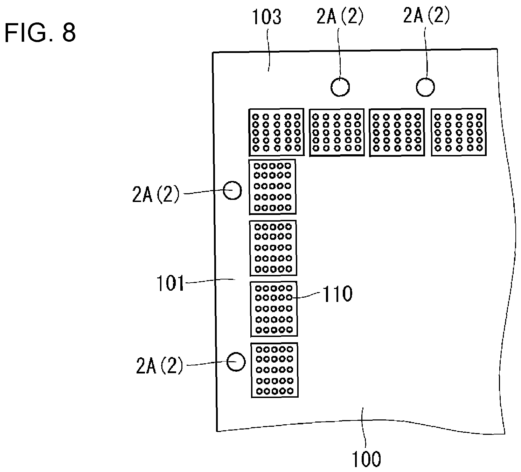

Although the communicators 2A are installed in the boundary area between the platform 100 with the braille blocks 110 and the trackside zone in the above embodiment, the communicators 2A may be installed in a boundary area between a platform 100 with no braille blocks 110 and a trackside zone. Although the multiple communicators 2A are installed in the boundary area in the above embodiment, a single communicator 2A may be installed there. Although the communicators 2A are installed on the edge 101 of the platform 100 extending along the railway tracks in the above embodiment, the communicators 2A may be installed in an edge portion of the platform 100 to be adjacent to the leading end of the train 200. The communicators 2A may be installed on an edge portion of the platform 100 to be adjacent to the rear end of the train 200. In other words, the edge portions of the platform 100 to be adjacent to the leading and rear ends of the train 200, similarly to the edge 101 adjacent to the railway tracks, can be areas of the platform 100 from which a person may possibly fall. The edge portions of the platform 100 to be adjacent to the leading and rear ends of the train 200 are referred to as terminal ends. FIG. 8 is a diagram of communicators 2A in an example of such arrangement at a terminal end 103 of the platform 100. The communicators 2A are installed at the terminal end 103 of the platform 100 to allow the notifier 32 to provide a notification to the person 10 approaching the terminal end 103. This reduces the possibility of the person 10 falling from the terminal end 103.

Although two communicators 2B are installed adjacent to the coupler 220 in the above embodiment, a single communicator 2B or three or more communicators 2B may be installed adjacent to the coupler 220. In some embodiments, no communicators 2B may be installed on the train 200. When the communicators 2B are installed on the train 200, no communicators 2Amay be installed on the platform 100.

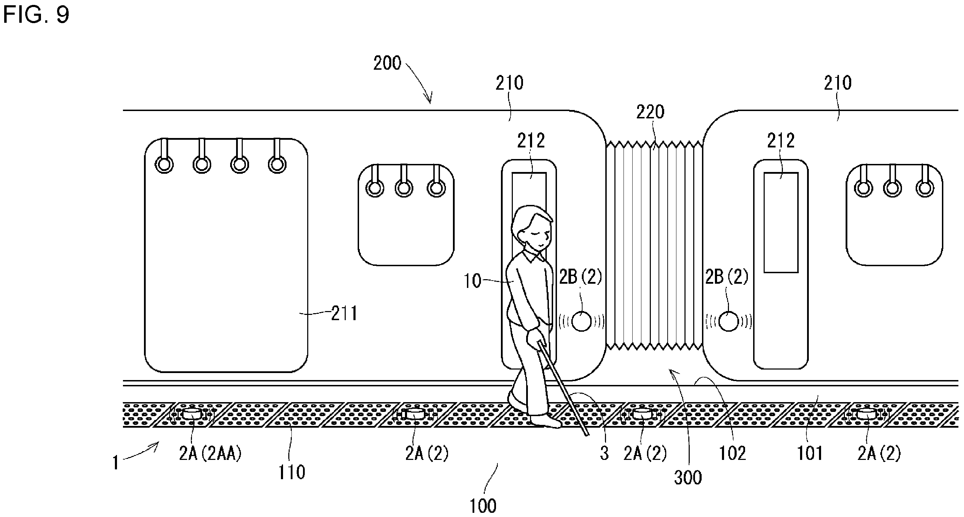

Although the communicators 2A are nearer the railway tracks and adjacent to (in other words, outward from) the braille blocks 110 in the above embodiment, the communicators 2Amay be installed on the braille blocks 110. FIG. 9 is a diagram of multiple communicators 2Ain an example of such arrangement. In the example of FIG. 9, multiple communicators 2A are installed on the braille blocks 110 along the edge 101 of the platform 100. The communicators 2A may be exposed on the braille blocks 110 or may be unexposed from the braille blocks 110. The communicators 2A may be located inside the braille blocks 110.

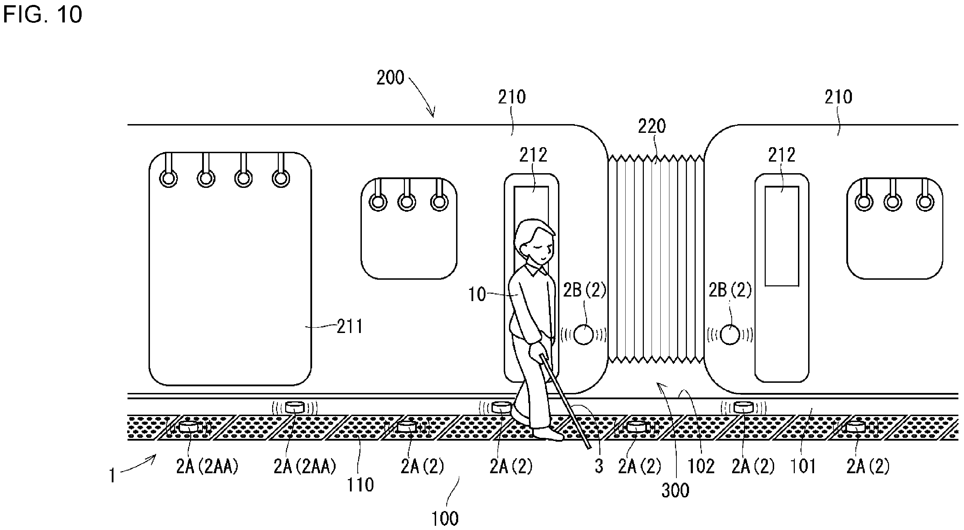

Although the multiple communicators 2A are installed in one line along the boundary area between the platform 100 and the trackside zone in the above embodiment, the communicators 2A may be installed in multiple lines along the boundary area. FIG. 10 is a diagram of multiple communicators 2A in an example of such arrangement.

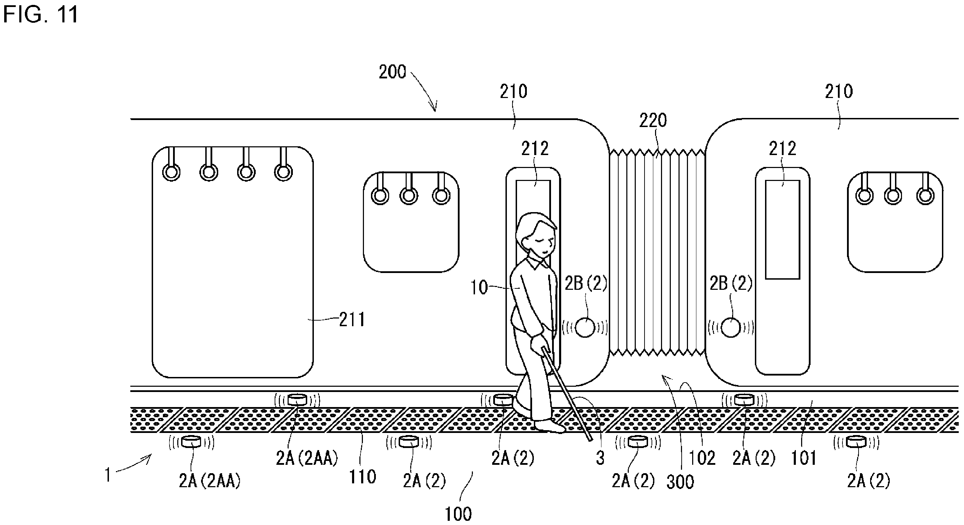

In the example of FIG. 10, the multiple communicators 2A are installed in two lines along the boundary area between the platform 100 and the trackside zone. More specifically, the communicators 2A are installed in two lines along the edge 101 of the platform 100. The communicators 2A include multiple communicators 2A in a first line along the edge 101 of the platform 100 installed on the braille blocks 110, and multiple communicators 2A in a second line along the edge 101 of the platform 100 installed in an area nearer the railway tracks and adjacent to the braille blocks 110. In the example of FIG. 10, the communicators 2Ain the first line are installed to avoid overlapping the communicators 2A in the second line in a direction perpendicular to the direction along the edge 101 of the platform 100. In some embodiments, the communicators 2A in the first line and the communicators 2A in the second line may overlap each other. The communicators 2A may be installed in three lines along the edge 101 of the platform 100. As shown in FIG. 11, the multiple communicators 2A may include multiple communicators 2A in a line located opposite to the railway tracks as viewed from the braille blocks 110, or specifically in the line inward from the braille blocks 110. In the example of FIG. 11, the multiple communicators 2A include multiple communicators 2A in one line outward from the braille blocks 110 and multiple communicators 2A in another line inward from the braille blocks 110.

When the communicators 2A are installed in such multiple lines along the boundary area between the first zone and the second zone, the user 10 approaching the second zone can receive multiple notifications from the white cane 3. In the examples of FIGs. 10 and 11, once the user 10 moves toward the edge line 102 of the platform 100 and approaches the braille blocks 110, the white cane 3 receives a signal from one of the communicators 2A in the first inward line and provides a notification to the user 10. As the user 10 moves further toward the edge line 102, the white cane 3 receives a signal from one of the communicators 2A in the second outward line and provides a notification to the user 10. This allows the user 10 to easily notice that the user 10 is approaching the second zone, which is a potentially dangerous zone. This improves the safety of the user 10 further. The multiple communicators 2A are installed in multiple lines along the boundary area between the platform 100 and the trackside zone as in the examples of FIGs. 10 and 11. This reduces the possibility of the person 10 falling from the platform 100 further.

When the multiple communicators 2A are installed in multiple lines along the boundary area between the first zone and the second zone, the white cane 3 may provide different notifications to the user 10 in response to signals from the communicators 2A in different lines. This allows the user 10 to more easily notice that the user 10 is approaching the second zone, which is a potentially dangerous zone. This improves the safety of the user 10 further.

In the example of FIG. 10, the white cane 3 provides a first notification to the user 10 in response to a signal transmitted from one of the communicators 2A in the first line. The white cane 3 provides a second notification to the user 10 in response to a signal transmitted from one of the communicators 2A in the second line. For example, each communicator 2A in the first line may transmit a signal containing information indicating a source of the signal to be a communicator 2A in the first line. This information is used by the white cane 3 to determine that the received signal is transmitted from a communicator 2A in the first line. Similarly, each communicator 2A in the second line may transmit a signal containing information indicating a source of the signal to be a communicator 2A in the second line. This information is used by the white cane 3 to determine that the received signal is transmitted from a communicator 2A in the second line.

The notifier 32 in the white cane 3 may provide, for example, a voice message reading the text "You are approaching an end of the platform." as the first notification, and a voice message reading the text "Please move away from a potentially dangerous zone. You may fall from the platform." as the second notification.

The notifier 32 may provide different modes of vibration in the first notification and in the second notification. For example, the notifier 32 may provide a weak vibration to the grip 30a of the cane body 30 as the first notification, and a strong vibration to the grip 30a as the second notification. The notifier 32 may provide different patterns of vibration in the first notification and in the second notification. The notifier 32 may provide a weak tactile sensation to a hand gripping the grip 30a as the first notification, and a strong tactile sensation to the hand gripping the grip 30a as the second notification.

In the example of FIG. 11, the notifier 32 may provide a first notification to the user 10 in response to the communicator 31 receiving a signal from one of the communicators 2A installed inward from the braille blocks 110, and may provide a second notification to the user 10 in response to the communicator 31 receiving a signal from one of the communicators 2A installed outward from the braille blocks 110. In this case, the notifier 32 may provide, for example, a voice message reading the text "You are approaching braille blocks." as the first notification, and a voice message reading the text "You are outside the braille blocks, being in a potentially dangerous zone." as the second notification.

When the multiple communicators 2A are installed along the boundary area between the platform 100 and the trackside zone, the user 10 moving along the edge 101 of the platform 100 can repeatedly receive notifications from the white cane 3. The user 10 can easily move along the platform 100 in the longitudinal direction based on notifications from the white cane 3. Thus, the braille blocks 110 may be eliminated from the platform 100 and may be replaced by multiple communicators 2A installed along the boundary area between the platform 100 and the trackside zone.

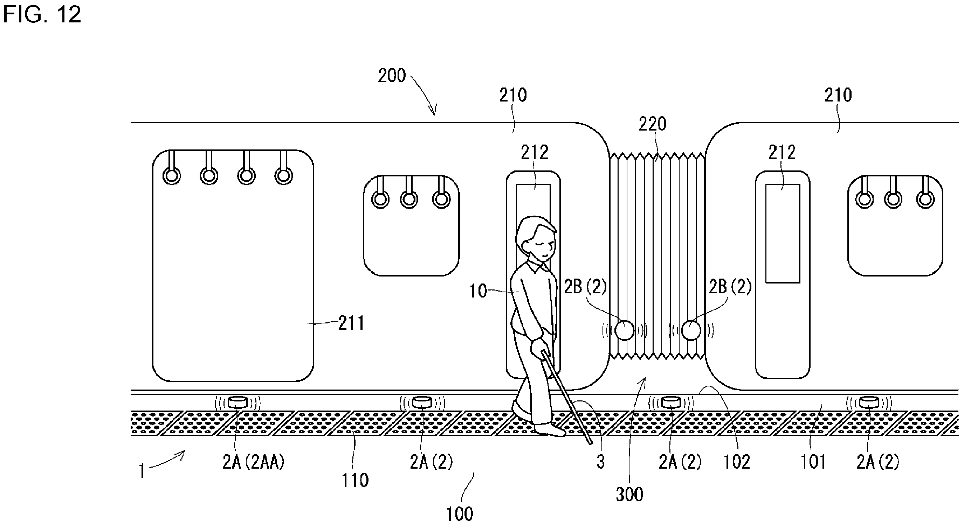

Although the communicators 2B are installed adjacent to the couplers 220 in the above embodiment, the communicators 2B may be installed on the couplers 220 as shown in FIG. 12. This also reduces the possibility of the user 10 falling through the gap 300 between the coupler 220 and the platform 100. Although two communicators 2B are installed on the coupler 220 in the example of FIG. 12, a single communicator 2B or three or more communicators 2B may be installed on the coupler 220.

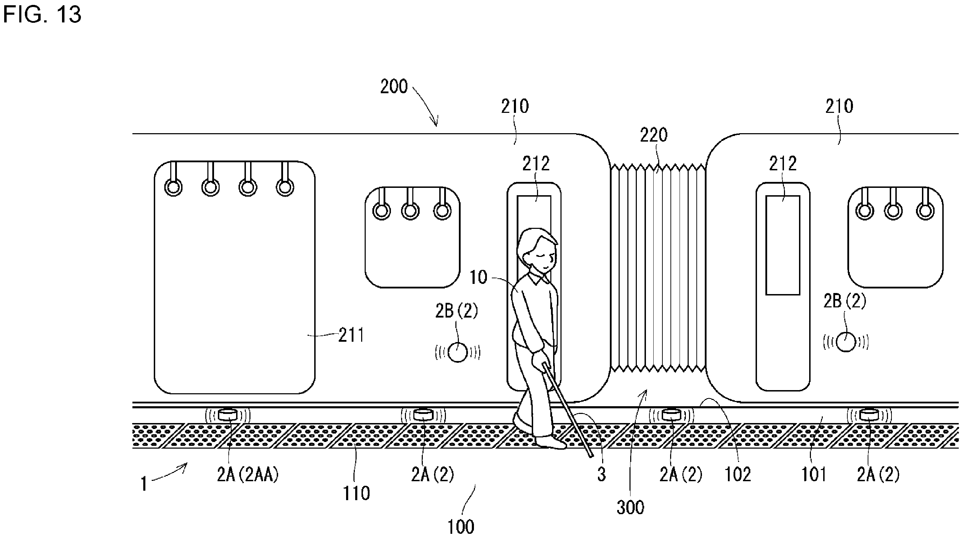

The communicators 2B may be installed on the train 200 at positions other than on or adjacent to the coupler 220. The communicators 2B may not be installed on or adjacent to each coupler 220. In the example of FIG. 13, the communicators 2B are not installed on or adjacent to the coupler 220 but are installed between the entrance 211 and the crew room door 212. Three or more communicators 2B may be installed on the train 200 at equal or unequal intervals.

Once the user 10 approaches one of the communicators 2AA located near the entrance 211 of the train 200 being stopped (in other words, the communicator 2AA located adjacent to the passenger door), the user 10 receives a notification from the white cane 3. The user 10 who intends to enter the train 200 through the entrance 211 may sense a potential danger and move away from the entrance 211.

The communication system 1 may be modified not to cause the white cane 3 to provide a notification to the user 10 approaching any communicator 2AA. In this modification, the user 10 approaching the entrance 211 receives no notification from the white cane 3 and thus does not hesitate to enter the train 200.

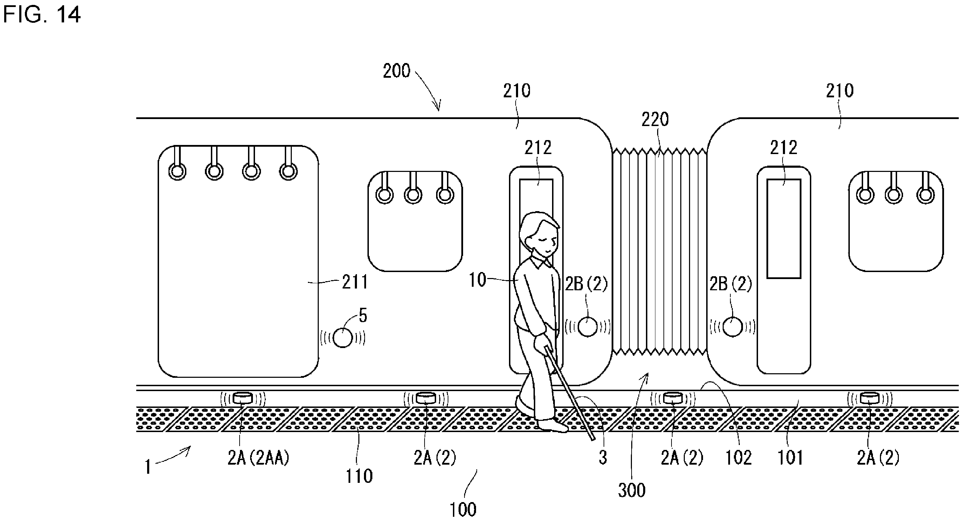

Various methods are available for not causing the white cane 3 to provide a notification to the user 10 approaching any communicator 2AA. For example, as shown in FIG. 14, a communicator 5 that can communicate with the communicators 2Amay be installed adjacent to the entrance 211. The communicator 5 may function as an RFID reader, similarly to, for example, the communicator 31 included in the white cane 3. The communicator 5 repeatedly transmits a signal. The communicators 2A do not transmit a signal in step s1 above when the communicator 5 is located nearby. More specifically, when repeatedly receiving a signal from the communicator 5, the communicators 2A do not transmit a signal in response to any signal transmitted from the communicator 31 in the white cane 3. The communicators 2AA located near the entrance 211 of the train 200 being stopped do not transmit a signal although the user 10 is nearby. The user 10 near the entrance 211 thus does not receive any notification from the white cane 3.

The communicators 2Amay transmit a first signal in step s1 when the communicator 5 is nearby, and may transmit a second signal different from the first signal in step s1 when the communicator 5 is not nearby. More specifically, the communicators 2A may transmit a first signal in response to a signal from the communicator 31 in the white cane 3 while receiving a signal repeatedly transmitted from the communicator 5, and may transmit a second signal in response to a signal from the communicator 31 without receiving any signal from the communicator 5. In this case, the white cane 3 does not provide a notification to the user 10 in response to a first signal, but provides a notification to the user 10 in response to a second signal. The white cane 3 thus does not provide a notification to the user 10 near the entrance 211.

The communicator 5 may be an RF tag. The white cane 3 may include a communicator 31 that communicates with the communicator 5 and a communicator 31 that communicates with the communicators 2A. In this case, the communicator 31 that communicates with the communicators 2A may stop communicating with the communicators 2A when the communicator 31 that communicates with the communicator 5 is located near the communicator 5. In other words, while the communicator 31 that communicates with the communicator 5 is repeatedly receiving a signal from the communicator 5, the communicator 31 that communicates with the communicators 2A may ignore any signal received from the communicators 2A. In this case as well, the white cane 3 thus does not provide a notification to the user 10 near the entrance 211.

The communicators 2B being active tags installed on the train 200 may be powered by the train 200. In this case, the communicators 2B include no battery 23. The communicators 2A being active tags installed on the platform 100 may be powered by a power supply installed on the platform 100. In this case, the communicators 2A include no battery 23. Either the communicators 2A or the communicators 2B may be passive tags, and the communicators 2A or the communicators 2B that are not passive tags may be active tags. The communicators 2 being active tags may repeatedly transmit signals regularly or irregularly, instead of transmitting signals in response to a signal from the communicator 31 in the white cane 3. The communicators 2A may include both active tags and passive tags. The communicators 2B may include both active tags and passive tags.

The processor 35 may store, for each of the communicators 2, identification information and notification mode information in a manner associated with each other. The identification information identifies the communicator 2. The notification mode information indicates the mode of notification provided by the notifier 32 in response to the communicator 31 receiving a signal from the communicator 2. In other words, the notification mode information represents a notification to be provided from the notifier 32 to the person 10. The notification mode information includes information indicating the mode of notification (e.g., using sound or vibration) and the details of the notification. Either the communicator 31 or the notifier 32 may store the identification information and the notification mode information in a manner associated with each other.

When the processor 35 stores the identification information and the notification mode information in a manner associated with each other, the communicator 2 transmits a signal including the identification information in step s1. When the communicator 31 receives a signal from the communicator 2 in step s2, the notifier 32 obtains notification mode information corresponding to the identification information included in the signal. The notifier 32 provides a notification in accordance with the obtained notification mode information to the person 10 in step s3. This allows the processor 35 to provide a notification to the person 10 in response to the communicator 2 receiving a signal in accordance with the position of the communicator 2.

In the examples of FIGs. 10 and 11 above, identification information for each of the communicators 2A in the first line is associated with first notification mode information, and identification information for each of the communicators 2A in the second line is associated with second notification mode information. The first notification mode information indicates the details of the first notification described above. The second notification mode information indicates the details of the second notification described above. When the communicator 31 receives a signal from one of the communicators 2A in the first line, the notifier 32 provides a notification to the person 10 in accordance with the first notification mode information. This provides the first notification described above to the person 10. When the communicator 31 receives a signal from one of the communicators 2A in the second line, the notifier 32 provides a notification to the person 10 in accordance with the second notification mode information. This provides the second notification described above to the person 10.

The notifier 32 may also provide, to the person 10, notification information including information about the train 200 in response to the communicator 31 receiving a signal from a specific communicator 2. For example, the processor 35 may store identification information for the specific communicator 2 and notification mode information indicating the details of the notification information and the mode of notification in a manner associated with each other. When the communicator 31 receives a signal from the specific communicator 2, the notifier 32 provides notification information to the person 10 based on notification mode information corresponding to identification information included in the signal.

The notification information may include information indicating the position of the corresponding passenger door. For example, the specific communicator 2 may be a communicator 2AA located near the passenger door of the train 200 stopped at the platform 100. In this case, when the communicator 31 receives a signal from the communicator 2AA, the notifier 32 may output a voice message reading the text "A door is nearby." The notifier 32 may also notify the person 10 that a passenger door is located near the person 10 by providing vibration in a predetermined mode to the person 10. The notifier 32 may also notify the person 10 that a passenger door is located near the person 10 by generating a predetermined sensation to a hand gripping the grip 30a. The notifier 32 may provide, in response to the communicator 31 receiving a signal from one of the communicators 2AA, a notification to the person 10 notifying the ordinal position of the unit car 210 including the passenger door near the communicator 2AA from the first unit car 210 of the train 200. In this case, the notifier 32 may provide a notification to the person 10 notifying the ordinal position of the passenger door from the first passenger door in the unit car 210, in addition to the ordinal position of the unit car 210 including the passenger door from the first unit car 210 of the train 200.

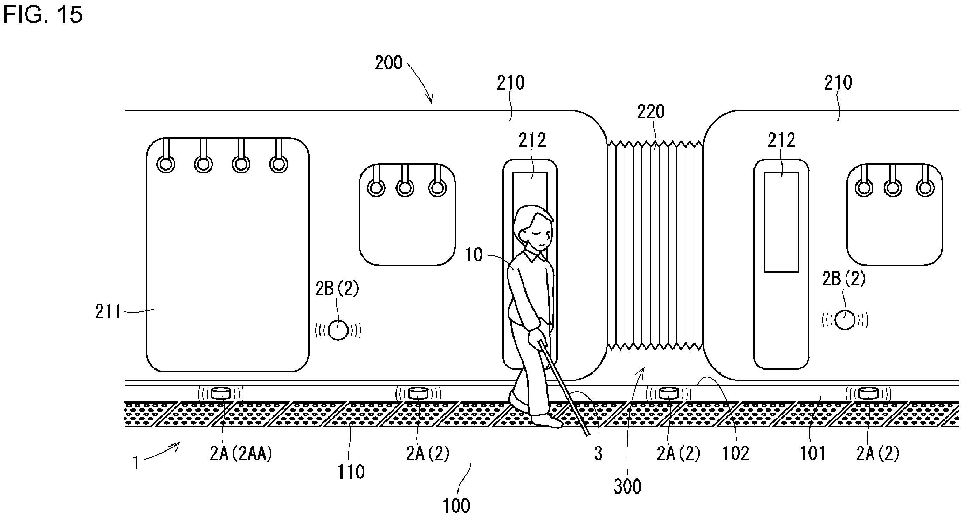

In another embodiment, notifiers 2B (also referred to as communicators 2B adjacent to doors) may be installed adjacent to the entrances 211 (passenger doors) of the train 200 as shown in FIG. 15. One of the communicators 2B is a specific communicator 2. In this case, in response to the communicator 31 receiving a signal from one of the communicators 2B adjacent to the doors, the notifier 32 may provide a notification to the person 10 notifying the position of the passenger door. In this case, the notifier 32 may provide, for example, the same notification as provided in response to the communicator 31 receiving a signal from one of the communicators 2AA.

The notification information may also include information about a specific unit car 210 (also referred to as a specific car 210) included in the train 200. For example, the train 200 is stopped at the platform 100, and one of the communicators 2A located near the specific car 210 of the train 200 (also referred to as a communicator 2A adjacent to the specific car 210) is installed on the platform 100. This communicator 2A is a specific communicator 2. In this case, the notifier 32 may provide, to the person 10, information about the specific car 210 in response to the communicator 31 receiving a signal from the communicator 2A adjacent to the specific car 210. When, for example, the specific car 210 is a women-only car, the notifier 32 may output a voice message reading the text "The unit car nearby is a women-only car." The notifier 32 may also notify the person 10 that the person 10 is near a women-only car by providing vibration in a predetermined mode to the person 10. The notifier 32 may also notify the person 10 that the person 10 is near a women-only car by generating a predetermined sensation to a hand gripping the grip 30a.

In another embodiment, a communicator 2B may be installed on the specific car 210. The communicator 2B is a specific communicator 2. In this case, the notifier 32 may provide a notification to the person 10 that the specific car 210 is located near the person 10 in response to the communicator 31 receiving a signal from the communicator 2B installed on the specific car 210. In this case, the notifier 32 may provide, for example, the same notification as provided in response to the communicator 31 receiving a signal from the communicator 2A adjacent to the specific car 210.

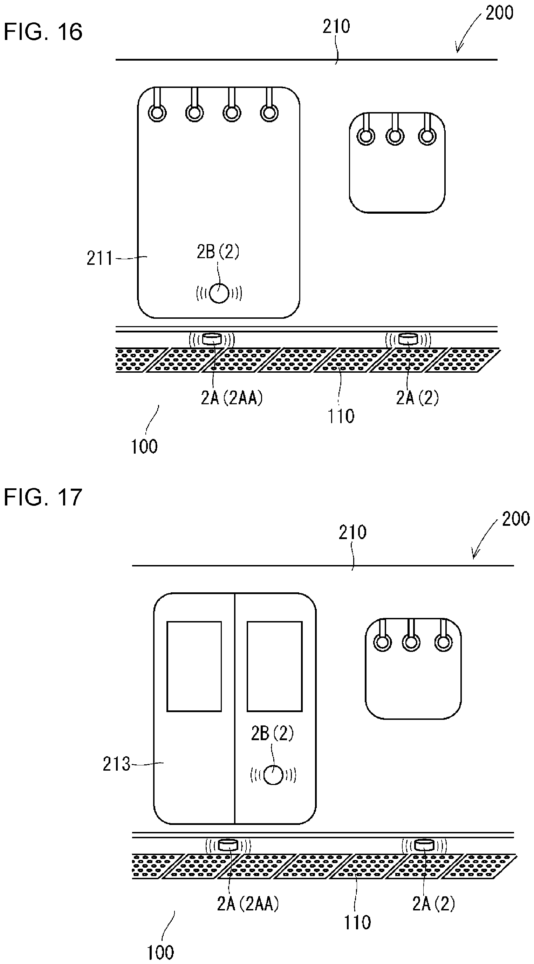

The notification information may also include information indicating that the passenger door in the train 200 is open. As shown in FIG. 16, for example, a communicator 2B may be installed near the entrance 211 inside the unit car 210 on the train 200. The communicator 2B is a specific communicator 2. In this example, when the passenger door at the entrance 211 inside the unit car 210 is closed, the communicator 31 in the white cane 3 carried by the person 10 on the platform 100 cannot receive a signal transmitted from the communicator 2B near the entrance 211 inside the unit car 210. The notifier 32 provides a notification to the person 10 that the passenger door is open in response to the communicator 31 receiving a signal transmitted from the communicator 2B near the entrance 211 inside the unit car 210. The notifier 32 may output a voice message reading the text "A door nearby is open." The notifier 32 may also notify the person 10 that the passenger door located near the person 10 is open by providing vibration in a predetermined mode to the person 10. The notifier 32 may also notify the person 10 that the passenger door near the person 10 is open by generating a predetermined sensation to a hand gripping the grip 30a.

The notification information may also include information indicating that the passenger door in the train 200 is closed. As shown in FIG. 17, for example, a communicator 2B is installed on a passenger door 213 in the unit car 210. The communicator 2B is a specific communicator 2. In this example, when the passenger door 213 on which the communicator 2B is installed is open, the communicator 31 in the white cane 3 carried by the person 10 on the platform 100 cannot receive a signal transmitted from the communicator 2B. The notifier 32 provides a notification to the person 10 that the passenger door is closed in response to the communicator 31 receiving a signal transmitted from the communicator 2B installed on the passenger door 213. The notifier 32 may output a voice message reading the text "A door nearby is closed." The notifier 32 may also notify the person 10 that the passenger door located near the person 10 is closed by providing vibration in a predetermined mode to the person 10. The notifier 32 may also notify the person 10 that the passenger door located near the person 10 is closed by generating a predetermined sensation to a hand gripping the grip 30a.

Although the communicators 2 and the communicator 31 in the white cane 3 communicate with each other using RFID in the above embodiment, the communication may be performed using another near-field communication scheme. For example, the communication between the communicators 2 and the communicator 31 may be performed using Bluetooth, Zigbee, or Wi-Fi Direct. The communicators 2A and the communicators 2B may conform to different near-field communication schemes. In this case, the communicator 31 in the white cane 3 is to conform to the two near-field communication schemes. The multiple communicators 2Amay include multiple communicators 2A that conform to different wireless communication schemes. The multiple communicators 2B may include multiple communicators 2A that conform to different wireless communication schemes.

Although the communicators 2 communicate directly with the white cane 3 in the above embodiment, the communicators 2 may communicate indirectly with the white cane 3. For example, the communicators 2 may communicate with the white cane 3 through a base station included in a mobile phone system, or through a Wi-Fi access point.

In response to a signal received from one of the communicators 2, the communicator 31 in the white cane 3 may transmit a signal to other communicators. For example, the communicator 31 may transmit warning information to a management server that manages the operation of the train 200 using, for example, Wi-Fi, to provide a notification to the management server of the presence of a walker who can possibly fall from the platform 100. In this case, the management server may display warning information to notify the user using the management server of the presence of a walker who can possibly fall from the platform 100. The management server may also transmit the warning information to a portable device carried by a station employee at the platform 100. The portable device receiving the warning information may notify the station employee of the presence of a walker who can possibly fall from the platform 100. The portable device may display the received warning information, output a sound, emit light, or transmit vibration to the station employee. The management server may transmit the warning information to a train-installed device installed on the train 200 stopped at the platform 100. The train-installed device receiving the warning information may notify a driver driving the train 200 of the presence of a walker who can possibly fall from the platform 100. The train-installed device may display the received warning information, output a sound, or emit light.

The communicator 31 may communicate with a portable device carried by the person 10. The communicator 31 may perform, for example, near-field communication with the portable device. The communication used between the communicator 31 and the portable device may be performed using Bluetooth, Zigbee, or Wi-Fi Direct. Instead of directly communicating with the portable device, the communicator 31 may communicate indirectly with the portable device. For example, the communicator 31 may communicate with the portable device through a base station included in a mobile phone system, or through a Wi-Fi access point.

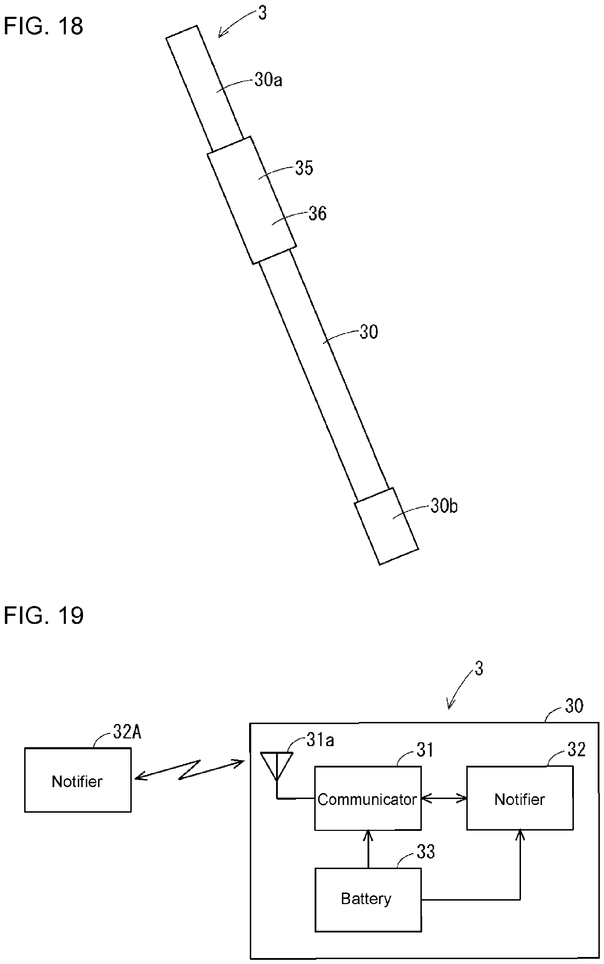

Although the processor 35 is incorporated in the cane body 30 of the white cane 3 in the above embodiment, the processor 35 may be mounted on an exterior surface of the cane body 30. FIG. 18 shows an example state of the processor 35 mounted on the exterior surface of the cane body 30. In the example of FIG. 18, the processor 35 includes a case 36 containing the communicator 31, the notifier 32, and the battery 33. The case 36 is attached to an exterior surface of the cane body 30. Although the case 36 is elongated in the present embodiment, the case 36 may have any other shape. In the example of FIG. 18, the case 36 is attached near the grip 30a, but may be attached at any position of the cane body 30. The case 36 may be removable or not removable from the cane body 30. When the notifier 32 provides a notification using vibration to the person 10 in the example of FIG. 18, the notifier 32 may vibrate the cane body 30 through the case 36.

In the example of FIG. 18, the battery 33 being a rechargeable battery may remain installed in the case 36 when recharged. In this case, the case 36 may include, on its surface, a charging terminal for charging the battery 33. The battery 33 contained in the case 36 may be chargeable contactlessly. The battery 33 may be removable from the case 36. In this case, the battery 33 may be removed from the case 36 before being charged. The charged battery 33 may then be installed again in the case 36. The battery 33 may be attachable to and detachable from the case 36 instead of being contained in the case 36.

When the processor 35 includes multiple notifiers 32, one or more of the notifiers 32 may be notifiers 32 separate from the white cane 3 (referred to as notifiers 32A). FIG. 19 shows an example notifier 32A separate from the white cane 3. The notifier 32A can communicate with the communicator 31 in the white cane 3. The notifier 32A can perform, for example, near-field communication with the communicator 31. The communication between the notifier 32A and the communicator 31 may be performed using Bluetooth, Zigbee, or Wi-Fi Direct.

A mobile phone such as a smartphone may function as the notifier 32A, or a wearable device with communication capabilities may function as the notifier 32A. The wearable device functioning as the notifier 32A may be a device worn on an arm, such as a wristband device or a wristwatch device. The wearable device may also be a device worn on a head, such as a headband device or a device shaped like glasses. The wearable device may be a device worn on a body, such as a device shaped like a name tag or a device shaped like a clothing. The notifier 32A may be a bone-conduction speaker with communication capabilities or a bone-conduction headset with communication capabilities.

In step s2 above, in response to a signal from the communicator 2, the communicator 31 notifies the notifier 32 in the white cane 3 of the reception of the signal from the communicator 2. The communicator 32 also transmits reception notification information to the communicator 32A indicating the reception of the signal from the communicator 2. In step s3, the notifier 32Ain the white cane 3 provides a notification to the person 10. In response to the reception notification information, the notifier 32A provides a notification to the person 10 using, for example, at least one of sound, vibration, or haptic technology.

In step s2 above, in response to a signal from the communicator 2, the communicator 31 notifies the notifier 32A of the reception of the signal from the communicator 2. The notifier 32A transmits reception notification information to the notifier 32 in the white cane 3 indicating the reception of the signal from the communicator 2. In step s3, the notifier 32 in the white cane 3 provides a notification to the person 10. In response to the reception notification information, the notifier 32 provides a notification to the person 10 using, for example, at least one of sound, vibration, or haptic technology.

When storing notification mode information, the communicator 31 may transmit, together with the reception notification information, notification mode information corresponding to identification information included in the received signal to the notifier 32A. When each notifier 32 stores notification mode information, the communicator 31 may transmit, together with the reception notification information, identification information included in the received signal to the notifier 32A. The notifier 32A obtains notification mode information corresponding to the received identification information and provides a notification to the person 10 in accordance with the obtained notification mode information.

The notifier 32 in the white cane 3 and the notifier 32A may provide different modes of notification. For example, in response to the communicator 31 receiving a signal from the communicator 2, the notifier 32 in the white cane 3 may provide a notification to the person 10 using vibration, and the notifier 32A may provide a notification to the person 10 using sound.

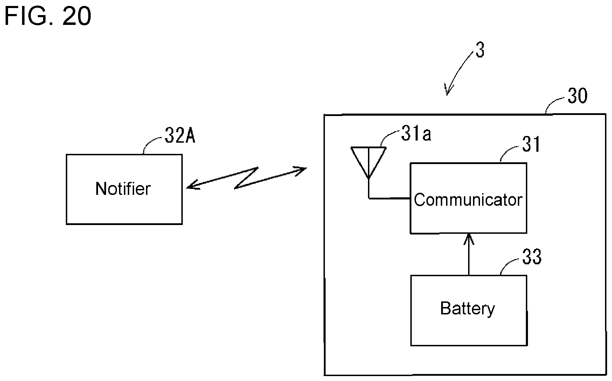

When the notifier 32A is installed separate from the white cane 3, the white cane 3 may not include the notifier 32 as shown in FIG. 20. The communicator 31 may communicate with multiple notifiers 32A. In this case, the multiple notifiers 32A may include multiple devices of the same type or may include multiple devices of different types. For example, the multiple notifiers 32A may include a mobile phone and a wearable device.

The notifier 32 may provide notifications in variable manners. When the processor 35 stores identification information for the communicator 2 and notification mode information in a manner associated with each other, the notification mode information may be changeable, and the mode of notification provided by the notifier 32 may be changeable using such notification mode information.

For example, the communicator 31 can communicate with a portable device such as a smartphone. For example, a person may operate the portable device to input identification information and the corresponding change in the notification mode information into the portable device. The portable device transmits the input identification information and the corresponding change to the communicator 31. The processor 35 changes the details of the notification mode information corresponding to the identification information received by the communicator 31 in accordance with the change received by the communicator 31. The notification mode information is changeable, and thus a sound output from the notifier 32 is also changeable, and further a vibration pattern of a notification provided using vibration by the notifier 32 is also changeable. The white cane 3 may include an operation unit operable by a person. The notification mode information in the processor 35 may be changeable in response to an operation on the white cane 3 performed by a person.

Although the carried object 3 carried by the person 10 is a white cane in the above embodiment, the carried object 3 may be a different type of object. For example, the carried object 3 may be a mobile phone such as a smartphone, or may be a wearable device. The wearable device as the carried object 3 may be a device worn on an arm, such as a wristband device or a wristwatch device. The wearable device may also be a device worn on a head, such as a headband device or a device shaped like glasses. The wearable device may be a device worn on a body, such as a device shaped like a name card or a device shaped like a clothing.

Although the user 10 is a visually impaired person in the above embodiment, the user 10 may be a person other than a visually impaired person. For example, the user 10 may be an elderly person with no visual impairment but carrying a cane as the carried object 3. The user 10 may be a person having a limp and carrying a cane as the carried object 3. The user 10 may be a child or an adult carrying a mobile phone or a wearable device as the carried object 3. A child or an adult moving on the platform 100 while looking at the screen of a mobile phone or a wearable device may have a possibility of falling from the platform 100 or hitting the train 200 being stopped. The communication system 1 reduces the possibility of such a child or an adult moving on the platform 100 while looking at the screen of a mobile phone or a wearable device falling from the platform 100 or hitting the stopped train 200. A drunk person moving on the platform 100 may also have a possibility of falling from the platform 100 or hitting the train 200 being stopped. The communication system 1 reduces the possibility of a drunk person falling from the platform 100 or hitting the stopped train 200.

When the user 10 is either a person other than a visually impaired person or a visually impaired person capable of sensing light, the notifier 32 may output light from a light emitter such as a light-emitting diode (LED) to provide a notification to the user 10 in step s3 above.

Although the first zone is the platform 100 and the second zone is a zone outward from the platform 100 in the above embodiment, other zones may be used as a combination of the first zone and the second zone. For example, the communicator 2A may be installed in a boundary area between a pathway on which the person 10 moves and a downward staircase connected to the pathway. This reduces the possibility of the person 10 falling from a staircase at a station. The communicator 2A may be installed in a boundary area between a pathway and a downward staircase connected to the pathway at a place other than a station.

The communicator 2A may be installed in a boundary area between a pathway on which the person 10 moves and a down escalator connected to the pathway. The communicator 2A may be installed in a boundary area between a pathway on which the person 10 moves and an upward staircase connected to the pathway. The communicator 2A may be installed in a boundary area between a pathway on which the person 10 moves and an up escalator connected to the pathway. The communicator 2A may be installed in a boundary area between a pathway and a staircase or an escalator connected to the pathway at a place other than a station.

Although the communication system 1 is used at a station in the above embodiment, the communication system 1 may be used in other places. For example, the communication system 1 may be used at a park with a pond. In this case, the communicator 2A may be installed in, for example, a boundary area between a zone surrounding the pond (first zone) and the pond (second zone). The communicator 2A may be installed on a signboard set up adjacent to or on the pond. The communicator 2A installed in a boundary area between the pond and the zone surrounding the pond reduces the possibility of the person 10 falling into the pond.

In another embodiment, the communication system 1 may be used on a road. In this case, the communicator 2A may be installed in, for example, a boundary area between a sidewalk (first zone) and a road (second zone) adjacent to the sidewalk. This reduces the possibility of the person 10 accidentally walking off the sidewalk onto the road. The communicator 2A in the boundary area between the sidewalk and the road may be installed at a curb or at a bus stop. The communicator 2B may be installed in a vehicle that is parked on a road or that moves on a road. The vehicle may be, for example, an automobile, a motorcycle, a motorized bicycle, or a bicycle. The communicator 2A may be installed in, for example, a boundary area between a sidewalk (first zone) and a bike path (second zone) adjacent to the sidewalk. The communicator 2B may be installed on a bicycle on a bike path. The communicator 2A may be installed in, for example, a boundary area between a sidewalk (first zone) and a ditch (second zone) adjacent to the sidewalk. This reduces the possibility of the person 10 stepping into the ditch.

The communicator 2A may be installed in, for example, a boundary area between an entrance of a crosswalk and a road adjacent to the crosswalk. This allows the person 10 to notice the entrance of the crosswalk. Multiple communicators 2A may be installed along each of the two ends of the crosswalk. This allows the person 10 crossing the crosswalk and approaching any side edge of the crosswalk to receive a notification. This reduces the possibility of the person 10 walking off the crosswalk.

In another embodiment, the communication system 1 may be used on a skiing area. In this case, the communicator 2A may be installed in, for example, a boundary area between a skiing path (first zone) and a zone outside the skiing path (second zone). The communicator 2A may be installed on a rope or a fence installed at the boundary between the skiing path and the zone outside the skiing path. This reduces the possibility of the person 10 accidentally moving out of the skiing path.

A communicator 2 may be installed at or adjacent to a specific position. This allows the person 10 to notice that the specific position is near the person 10. For example, the communicator 2 may be installed on or adjacent to a taxi stand. The communicator 2 may be installed on or adjacent to a bus stop. The communicators 2 may be installed on an obstacle located above the person 10. An obstacle located above the person 10 may be, for example, a signboard or a back side of a stair part of a pedestrian bridge. The communicator 2 may be installed at or adjacent to a construction site. The communicator 2 may be installed on or adj acent to a utility pole. The communicator 2 may be installed at an intersection, in a building, or in a store. The communicator 2 may be installed adjacent to an entrance or an exit of a station building or another building. The communicator 2 may be installed in or adjacent to a restroom. The communicator 2 may be installed at or adjacent to an entrance of a home of the person 10. The communicator 2 may be installed on or adjacent to an elevator.

Although the communication system 1 includes the entire part of the carried object 3, the communication system 1 may include a part of the carried object 3. For example, the communication system 1 may include the processor 35 of the components of the carried object 3. The communication system 1 may include the communicator 31 and the notifier 32 of the components of the carried object 3. The communication system 1 may include a vehicle (e.g., the train 200) on which the communicator 2B is installed. The communication system 1 may include the platform 100 on which the communicator 2A is installed.

The communication system 1 has been described in detail as above, but the foregoing structures are illustrative in all respects, and the disclosure is not limited to the above structures. The above embodiments may be combined in any manner unless any contradiction arises. Examples other than those illustrated above may also be included without departing from the scope of the present disclosure.

### Reference Signs List

1 communication system
2, 2A, 2B communicator
3 carried object
10 person
31 communicator
32 notifier
35 processor
100 station platform
200 train
220 coupler

## Claims

1. A communication system, comprising:
at least one first communicator installable in a boundary area between a first zone and a second zone;
a second communicator installable on a carried object to be carried by a person movable in the first zone, the second communicator being configured to communicate with the at least one first communicator; and
a notifier configured to provide a notification to the person carrying the carried object in response to the second communicator receiving a first signal from the at least one first communicator.

2. The communication system according to claim 1, wherein
the at least one first communicator includes a plurality of first communicators installable along the boundary area.

3. The communication system according to claim 2, wherein
the plurality of first communicators are installable in a plurality of lines along the boundary area.

4. The communication system according to claim 3, wherein
the first zone includes a station platform,
the plurality of first communicators include
a plurality of first communicators installable in a first line along the boundary area, and
a plurality of first communicators installable in a second line along the boundary area, the second line in which the plurality of first communicators are installable being nearer an edge of the station platform than the first line in which the plurality of first communicators are installable, and
the notifier provides a first notification to the person in response to the second communicator receiving the first signal from a first communicator included in the plurality of first communicators installable in the first line, and
provides a second notification different from the first notification to the person in response to the second communicator receiving the first signal from a first communicator included in the plurality of first communicators installable in the second line.

5. The communication system according to claim 4, wherein
the first notification includes a first mode of notification provided using vibration, and
the second notification includes a second mode of notification provided using vibration different from the vibration used for the first mode of notification.

6. The communication system according to claim 4 or claim 5, wherein
the boundary area includes braille blocks,
the plurality of first communicators installable in the second line are located nearer the edge than the braille blocks, and
the plurality of first communicators installable in the first line are located opposite to the edge with the braille blocks in between.

7. The communication system according to any one of claims 1 to 6, further comprising:
at least one third communicator installable on a vehicle located in the second zone, the at least one third communicator being configured to communicate with the second communicator,
wherein the notifier provides a notification to the person carrying the carried object in response to the second communicator receiving a second signal from the at least one third communicator.

8. The communication system according to claim 7, wherein
the first zone includes a station platform,
the vehicle includes a train, and
the at least one third communicator includes a third communicator installable on or adjacent to a coupler in the train.

9. The communication system according to claim 7, wherein
the first zone includes a station platform,
the vehicle includes a train, and
the notifier provides, to the person, notification information including information about the train in response to the second communicator receiving the second signal from a third communicator included in the at least one third communicator.

10. The communication system according to any one of claims 1 to 8, wherein
the first zone includes a station platform, and
the notifier provides, to the person, notification information including information about a train located in the second zone in response to the second communicator receiving the first signal from a first communicator included in the at least one first communicator.

11. The communication system according to claim 9 or claim 10, wherein
the notification information includes information indicating a position of a door to allow entering and exiting the train.

12. The communication system according to any one of claims 9 to 11, wherein
the notification information includes information about a specific car included in the train.

13. The communication system according to any one of claims 1 to 12, wherein
the first zone includes a station platform, and
the at least one first communicator includes a first communicator located at a terminal end of the station platform.

14. The communication system according to any one of claims 1 to 13, wherein
the at least one first communicator includes a radio frequency tag.

15. The communication system according to claim 14, wherein
the radio frequency tag includes a passive tag.

16. The communication system according to any one of claims 1 to 15, wherein
the second communicator wirelessly communicates with the at least one first communicator using a communication frequency band included in an ultrahigh frequency band.

17. A processor, comprising:
the second communicator and the notifier included in the communication system according to any one of claims 1 to 16.

18. A carried object to be carried by a person, the carried object comprising:
the processor according to claim 17.
